# EUROPÄISCHE PATENTSCHRIFT

(11) **EP 1 686 448 B1**
(45) Veröffentlichungstag und Bekanntmachung des Hinweises auf die Patenterteilung: **29.08.2007**
(21) Anmeldenummer: 06000091.6
(22) Anmeldetag: 03.01.2006
(51) Int. Cl.: G06F 1/18, G11B 33/12, H05K 7/14, H05K 5/02

(54) **Gehäusekäfig zur Aufnahme von Einbaumodulen**
Cage for modules
Cage pour modules

(30) Priorität: 28.01.2005 DE 102005004104
(43) Veröffentlichungstag der Anmeldung: 02.08.2006
(73) Patentinhaber: Fujitsu Siemens Computers GmbH, 80807 München (DE)
(72) Erfinder: Köhler, Friedrich, 86405 Meitingen (DE); Bez, Mario, 86159 Augsburg (DE); Scherer, August, 86424 Dinkelscherben (DE)
(74) Vertreter: Epping - Hermann - Fischer

(56) Entgegenhaltungen:
- US-A1- 2002 080 573
- US-B1- 6 341 059
- US-B1- 6 580 604
- US-B1- 6 590 848

## Beschreibung

Die Erfindung betrifft einen Gehäusekäfig mit Wandabschnitten und mit diesen winklig verbundenen Auflageflächen zur Abstützung von in dem Gehäusekäfig aufgenommenen Einbaumodulen; (vgl. zB. US-A-6 341 059).

Gehäusekäfige zur Aufnahme von Einbaumodulen sind vielfach bekannt. Diese dienen z.B. zur Aufnahme von Laufwerksmodulen in einen Laufwerkskäfig eines Computergehäuses. Bedingt durch die Vielfalt der aufzunehmenden Geräte ist hierbei oft zumindest eine der Abmessungen der aufzunehmenden Module nicht festgelegt. Z.B. gibt es 5 1/4"-Laufwerks-Module in voller und in halber Bauhöhe zur Aufnahme in Gehäusekäfige. Dabei sind Einbaumodule mit halber Bauhöhe weiter verbreitet als Einbaumodule mit voller Bauhöhe, weshalb die zugehörigen Gehäusekäfige typischerweise mit Auflageflächen zur Aufnahme von Einbaumodulen mit halber Bauhöhe eingerichtet sind.

Um dennoch Einbaumodule voller Bauhöhe in einen solchen Gehäusekäfig aufnehmen zu können, müssen zumindest einige der Auflageflächen des Gehäusekäfigs aus dessen Innenraum entfernt werden können. Dies wird typischerweise dadurch erreicht, dass zumindest einige der Auflageflächen als nachträglich in den Gehäusekäfig eingeschraubtes Zusatzteil ausgeführt sind. Beim Einbau von Modulen mit voller Bauhöhe werden solche Auflageflächen, die die Aufnahme des Einbaumoduls behindern, durch Lösen der Verschraubung wieder aus dem Gehäusekäfig entfernt. Der nachträgliche Einbau und mögliche Ausbau von solchen zusätzlichen Auflageflächen ist dabei teuer und aufwändig. Das fertig montierte Gehäuse besteht nicht nur aus dem Gehäusekäfig selber, sondern auch aus den zusätzlich benötigten Auflageflächen.

Alternativ können auch Schienen zur Aufnahme von Einbaumodulen verwendet werden. Dabei werden die Schienen erst bei der Aufnahme eines Einbaumoduls in den Gehäusekäfig eingebaut. Auch diese Lösung ist verhältnismäßig aufwändig und erfordert die Schienen als ein relativ teures Zusatzteil zur Aufnahme von Einbaumodulen.

Der durch die Aufnahme von Einbaumodulen unterschiedlicher Bauhöhe entstehende Aufwand während der Herstellung des Gehäuses und der Aufnahme von Einbaumodulen sowie die Kosten für die benötigten Zusatzteile sind durch die selten benötigte Funktion der Aufnahme von Einbaumodulen mit voller Bauhöhe nicht gerechtfertigt.

Die Aufgabe der Erfindung ist es deshalb, einen Gehäusekäfig zu beschreiben, der die Aufnahme von Einbaumodulen unterschiedlicher Bauhöhe erlaubt, ohne dass zusätzliche Auflageflächen aus dem Gehäusekäfig ausgebaut oder Schienen in den Gehäusekäfig eingebaut werden müssen.

Die Aufgabe wird erfindungsgemäß durch einen Gehäusekäfig mit Wandabschnitten und mit diesen winklig verbundenen Auflageflächen zur Abstützung von in dem Gehäusekäfig aufgenommenen Einbaumodulen gelöst, der dadurch gekennzeichnet ist, dass die Wandabschnitte nur an einer ersten Seite mit einer Wand des Gehäusekäfigs verbunden sind und in der Wand Einschnitte zwischen den anderen Seiten der Wandabschnitte und der Wand des Gehäusekäfigs vorhanden sind, sodass die Wandabschnitte gegenüber der Wand des Gehäusekäfigs entlang der ersten Seite abgebogen werden können.

Im Grundzustand sind die Auflageflächen so in dem Gehäusekäfig angeordnet, dass eine Aufnahme von Einbaumodulen mit halber Bauhöhe möglich ist. Dabei macht sich die Erfindung zu Nutze, dass die Wandabschnitte mit den damit verbundenen Auflageflächen aufgrund der erfindungsgemäßen Einschnitte aus dem Innenbereich des Gehäusekäfigs herausgebogen werden können, sodass eine Aufnahme von Einbaumodulen mit hoher Bauhöhe ermöglicht wird. Dazu ist der abbiegbare Wandabschnitt nur an einer einzigen Seite mit der Wand des Gehäusekäfigs verbunden, während Einschnitte zwischen den anderen Seiten des Wandabschnittes und der Wand des Gehäusekäfigs erlauben, den Wandabschnitt entlang der ersten Seite aus der Gehäusewand herauszubiegen. Die zum Abbiegen benötigten Einschnitte in der Wand des Gehäusekäfigs können bereits während des Herstellungsprozesses in die Gehäusewand eingearbeitet werden.

Dabei kann die Verbindung des Wandabschnittes mit der Auflagefläche sehr stabil ausgeführt sein, was zu guten mechanischen Eigenschaften in Richtung der durch ein aufgenommenes Einbaumodul verursachten Gewichtskraft führt. Gleichzeitig kann die Verbindung der ersten Seite des Wandabschnittes mit der Wand des Gehäusekäfigs so ausgeführt werden, dass der Wandabschnitt mit der damit verbundenen Auflagefläche leicht aus der Wand des Gehäusekäfigs herausgebogen werden kann. Denn im normalen Betrieb, also im montierten Zustand, greift in dieser Richtung keine Kraft an dem Wandabschnitt an.

Vorteilhafterweise wird die Verbindung zwischen der Wand des Gehäusekäfigs und dem abbiegbaren Wandabschnitt während des Herstellungsprozesses des Gehäuses bereits so vorbereitet, dass ein Abbiegen des Wandabschnittes gegenüber der Wand des Gehäusekäfigs entlang der ersten Seite des Wandabschnittes leicht möglich ist. Hierzu kann beispielsweise eine eingestanzte Vertiefung zwischen der Wand des Gehäusekäfigs und der ersten Seite des Wandabschnittes vorgesehen sein. Ebenso ist es möglich, den Wandabschnitt nur an einem Teilabschnitt der ersten Seite mit der Wand des Gehäusekäfigs zu verbinden.

Weitere Einzelheiten und Ausgestaltungen der Erfindung sind in den Unteransprüchen angegeben.

Die Erfindung wird nachfolgend an zwei Ausführungsbeispielen anhand der Zeichnungen näher erläutert. In den Zeichnungen zeigen:
Figur 1 einen erfindungsgemäßen Gehäusekäfig mit abbiegbaren Wandabschnitten,
Figur 2 eine Draufsicht auf eine erste Ausführungsform eines abbiegbaren Wandabschnittes,
Figur 3 eine Seitenansicht einer zweiten Ausführungsform eines abbiegbaren Wandabschnittes.

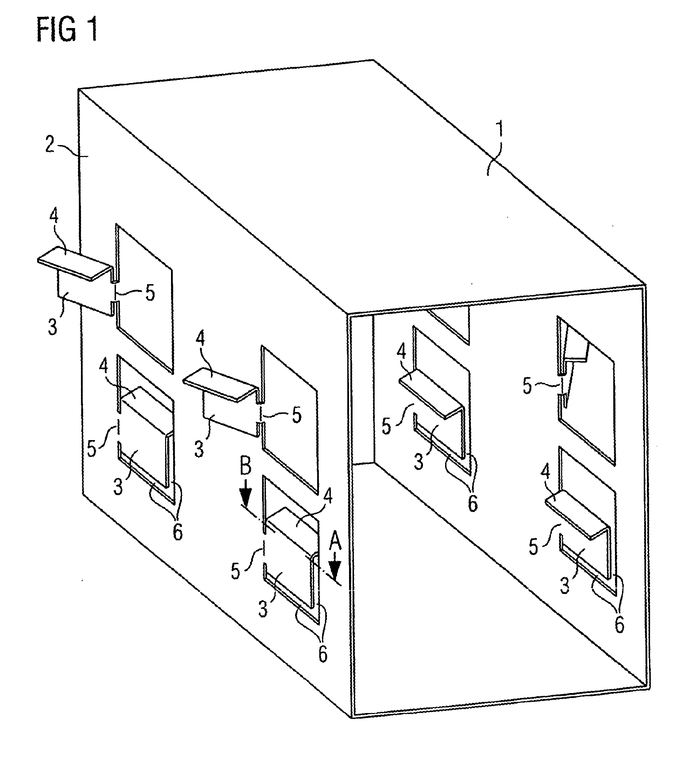

Figur 1 zeigt einen Gehäusekäfig 1, dessen Wände 2 jeweils vier abbiegbare Wandabschnitte 3 aufweisen. Die abbiegbaren Wandabschnitte 3 sind winklig mit Auflageflächen 4 verbunden. Des weiteren sind die abbiegbaren Wandabschnitte 3 an einer ersten Seite 5 mit einer der Wände 2 des Gehäusekäfigs 1 verbunden. Zwischen den anderen Seiten der Wandabschnitte 3 und der Wand 2 des Gehäusekäfigs 1 sind Einschnitte 6 vorhanden.

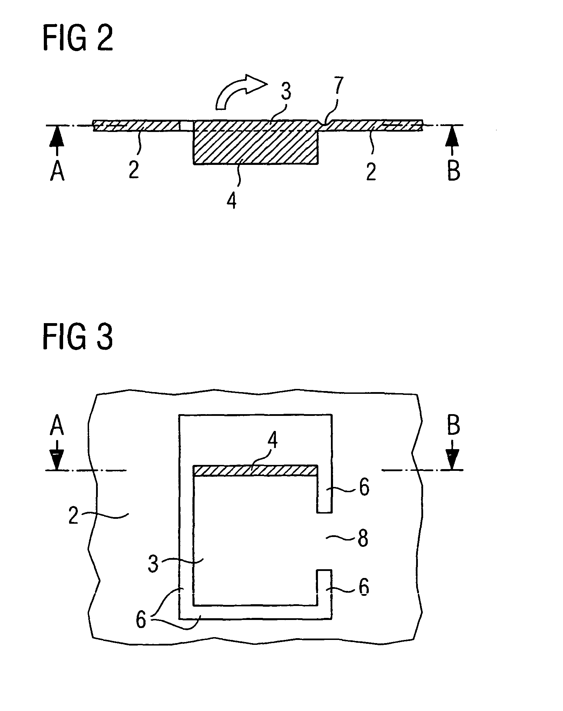

Figur 2 zeigt eine detaillierte Draufsicht entlang des Schnittes A-B auf eine erste Ausführungsform des Wandabschnittes 3. Hierin ist der Wandabschnitt 3 mit der damit verbundenen Auflagefläche 4 durch eine Vertiefung 7 von der Wand 2 des Gehäusekäfigs 1 abgesetzt. Soll ein Einbaumodul, das das Entfernen der Auflageflächen 4 aus dem Inneren des Gehäusekäfigs 1 erfordert, in den Gehäusekäfig 1 aufgenommen werden, so wird der Wandabschnitt 3 und die damit verbundene Auflagefläche 4 in Richtung des Pfeiles in Figur 2 aus dem Inneren des Gehäusekäfigs 1 herausgebogen. Durch die eingestanzte Vertiefung 7 ist ein Verbiegen des Wandabschnittes 3 in Pfeilrichtung verhältnismäßig leicht möglich.

Figur 3 zeigt eine zweite Ausführungsform der Erfindung. Hierin ist der Wandabschnitt 3 und die damit verbundene Auflagefläche 4 nur an einem Teilabschnitt 8 der ersten Seite 5 mit der Wand 2 des Gehäusekäfigs 1 verbunden. Andere Teilabschnitte der ersten Seite 5 und die anderen Seiten des Wandabschnittes 3 sind durch Einschnitte 6 von der Wand 2 getrennt. Ein Herausbiegen des Wandabschnittes 3 mit der damit verbundenen Auflagefläche 4 ist in analoger Weise zum ersten Ausführungsbeispiel möglich.

In beiden Ausführungsbeispielen dient ein rechtwinklig zum Wandabschnitt 3 abgebogener Lappen als Auflagefläche 4 zum Einbau von Einbaumodulen. Dabei ist es vorteilhaft, dass eine durch ein aufgenommenes Einbaumodul auftretende Haltekraft senkrecht auf die Auflagefläche 4 wirkt und somit parallel zur Biegeachse der ersten Seite 5 des Wandabschnittes 3 wirkt. Einbaumodule üben daher keine Kraft auf den Wandabschnitt 3 aus, die zu einem versehentlichen Herausbiegen des Wandabschnittes 3 aus der Wand 2 des Gehäusekäfigs 1 führen würde. Auf diese Weise besitzt der erfindungsgemäße Gehäusekäfig mit den damit verbundenen Auflageflächen die zum Halten der Einbaumodule nötige Stabilität, wobei ein Herausbiegen der Auflageflächen mit Hilfe eines geeigneten Werkzeuges trotzdem leicht möglich ist.

Es sind jedoch alternative Ausführungen des erfindungsgemäßen Gehäusekäfigs 1 möglich, bei denen die erste Seite 5 eines Wandabschnittes 3 auch in anderen Richtungen verläuft. Beispielsweise könnte die erste Seite 5 durch eine der Schrägseiten eines Dreiecks unterhalb oder oberhalb einer Auflagefläche 4 gebildet werden, also schräg verlaufen. Dabei wäre die Auflagefläche 4 mit einer horizontalen Seite des Dreiecks verbunden, und die letzte Seite des Dreiecks wäre erfindungsgemäß durch einen Einschnitt 6 von der Wand 2 des Gehäusekäfigs 1 getrennt. Ebenso kann die erste Seite 5 parallel zur Auflagefläche 4 verlaufen, also horizontal. Denn auch in einer solchen Anordnung wirkt die durch ein aufgenommenes Einbaumodul verursachte Gewichtskraft nicht in Richtung der zum Herausbiegen des Wandabschnittes 3 benötigten Kraft.

### Bezugszeichenliste

- 1: Gehäusekäfig
- 2: Wand
- 3: Wandabschnitt
- 4: Auflagefläche
- 5: erste Seite
- 6: Einschnitt
- 7: Vertiefung
- 8: Teilabschnitt

## Patentansprüche

1. Gehäusekäfig (1) mit Wandabschnitten (3) und mit diesen winklig verbundenen Auflageflächen (4) zur Abstützung von in dem Gehäusekäfig (1) aufgenommenen Einbaumodulen,
**dadurch gekennzeichnet, dass**
die Wandabschnitte (3) nur an einer ersten Seite (5) mit einer Wand (2) des Gehäusekäfigs (1) verbunden sind und in der Wand Einschnitte (6) zwischen den anderen Seiten der Wandabschnitte (3) und der Wand (2) des Gehäusekäfigs (1) vorhanden sind, sodass die Wandabschnitte (3) gegenüber der Wand (2) des Gehäusekäfigs (1) entlang der ersten Seite (5) abgebogen werden können.

2. Gehäusekäfig (1) nach Anspruch 1,
**dadurch gekennzeichnet, dass**
die Auflageflächen (4) als horizontale Lappen ausgeführt sind, wobei die Lappen aus dem abbiegbaren Wandabschnitt (3) des Gehäusekäfigs (1) herausgebogen sind.

3. Gehäusekäfig (1) nach einem der Ansprüche 1 oder 2,
**dadurch gekennzeichnet, dass**
der Gehäusekäfig (1) eine eingestanzte Vertiefung (7) zwischen der Wand (2) des Gehäusekäfigs (1) und der ersten Seite (5) des Wandabschnittes (3) aufweist, an der der Wandabschnitt (3) abgebogen werden kann.

4. Gehäusekäfig (1) nach einem der Ansprüche 1 bis 3,
**dadurch gekennzeichnet, dass**
der Wandabschnitt (3) nur an einem Teilabschnitt (8) der ersten Seite (5) mit der Wand (2) des Gehäusekäfigs (1) verbunden ist und andere Abschnitte der ersten Seite (5) durch Einschnitte (6) von der Wand (2) des Gehäusekäfigs (1) getrennt sind.

5. Gehäusekäfig (1) nach einem der Ansprüche 1 bis 4,
**dadurch gekennzeichnet, dass**
der Gehäusekäfig (1) ein Laufwerkskäfig ist und die Einbaumodule 5 1/4"-Laufwerke mit halber oder voller Bauhöhe sind.

## Claims

1. Housing cage (1) having wall sections (3) and having contact surfaces (4) which connect to them at an angle in order to support built-in modules which are held in the housing cage (1)
**characterized in that**
the wall sections (3) are connected only on one first side (5) to a wall (2) of the housing cage (1), and incisions (6) are provided in the wall between the other faces of the wall sections (3) and the wall (2) of the housing case (1), so that the wall sections (3) can be bent along the first side(5) with respect to the wall (2) of the housing cage (1).

2. Housing cage (1) according to Claim 1,
**characterized in that**
the contact surfaces (4) are in the form of horizontal flaps, with the flaps being bent out of that wall section (3) of the housing cage (1) which can be bent.

3. Housing cage (1) according to one of Claims 1 or 2,
**characterized in that**
the housing cage (1) has a stamped-in depression (7) between the wall (2) of the housing cage (1) and the first side (5) of the wall section (3), on which the wall section (3) can be bent.

4. Housing cage (1) according to one of Claims 1 to 3,
**characterized in that**
the wall section (3) is connected to the wall (2) of the housing cage (1) only on a subsection (8) of the first side (5) and other sections of the first side (5) are separated by incisions (6) from the wall (2) of the housing cage (1).

5. Housing cage (1) according to one of Claims 1 to 4,
**characterized in that**
the housing cage (1) is a drive cage, and the built-in modules are 5 1/4" drives of half the standard height or the full standard height.

## Revendications

1. Cage (1) comprenant des portions de paroi (3) et des faces d'appui (4) connectées angulairement à celles-ci pour supporter des modules reçus dans la cage (1),
**caractérisée en ce que**
les portions de paroi (3) ne sont connectées que d'un premier côté (5) à une paroi (2) de la cage (1) et des entailles (6) sont prévues dans la paroi entre les autres côtés des portions de paroi (3) et la paroi (2) de la cage (1), de sorte que les portions de paroi (3) puissent être repliées le long du premier côté (5) par rapport à la paroi (2) de la cage (1).

2. Cage (1) selon la revendication 1,
**caractérisée en ce que**
les faces d'appui (4) sont réalisées sous forme de languettes horizontales, les languettes étant dépliées de la portion de paroi repliable (3) de la cage (1).

3. Cage (1) selon la revendication 1 ou 2,
**caractérisée en ce que**
la cage (1) présente un renfoncement (7) estampé entre la paroi (2) de la cage (1) et le premier côté (5) de la portion de paroi (3), au niveau duquel la portion de paroi (3) peut être repliée.

4. Cage (1) selon l'une quelconque des revendications 1 à 3,
**caractérisée en ce que**
la portion de paroi (3) n'est connectée qu'au niveau d'une portion partielle (8) du premier côté portions du premier côté (5) sont séparées par des entailles (6) de la paroi (2) de la cage (1).

5. Cage (1) selon l'une quelconque des revendications 1 à 4,
**caractérisée en ce que**
la cage (1) est une cage de lecteur et les modules sont des lecteurs 5 1/4" de demi-hauteur ou de hauteur totale.
